# EUROPEAN PATENT APPLICATION

(11) **EP 4 753 101 A1**
(43) Date of publication of application: **03.06.2026**
(21) Application number: 25171834.2
(22) Date of filing: 23.04.2025
(51) Int. Cl.: H02J 7/00, H02J 50/00, H02J 50/10, H02J 50/40

(54) **WIRELESS CHARGER**

(30) Priority: 27.11.2024 KR 20240171991
(71) Applicant: Hyundai Motor Company, Seoul 06797 (KR); Kia Corporation, Seoul 06797 (KR)
(72) Inventor: KIM, Dae Joong, 18280 Hwaseong-si, Gyeonggi-do (KR)
(74) Representative: Isarpatent

(57) **Abstract**

A wireless charger includes a base module and a coil module. The coil module is configured to be detachably attachable to the base module. The coil module includes a coil for charging and is configured to be electrically connected to the base module.

## Description

### BACKGROUND

### 1. Technical Field

The present disclosure relates to a wireless charger, and more specifically, to a wireless charger with improved wireless charging efficiency.

### 2. Discussion of Related Art

Charging methods of electronic devices are divided into contact type charging methods and non-contact type charging methods. The contact type charging method is a method in which an electrode connected to a battery of an electronic device is closely in direct contact with an electrode of a power supply device to perform charging, and since a structure therefor is simple, the contact type charging method is generally used in various fields. However, there is inconvenience that an electrode of an electronic device is physically connected to an electrode of a power supply device, e.g., connection to a connector.

In order to solve the inconvenience of such a contact type charging method, a non-contact type charging method has been proposed. A non-contact type charging method, also referred to as a wireless charging method, is a method of charging through electromagnetic induction. In non-contact type charging, a primary coil (transmission coil) is provided in a charger (wireless power transmission device), a secondary coil (receptions coil) is provided in an electronic device (wireless power reception device) that is a charging target, and a current generated by a magnetic induction method between the primary coil and the secondary coil is converted into energy to charge a battery.

As an international wireless charging standard is updated (qi 2.0), methods of charging portable phones are diversified. For example, there are existing charging methods including an extended power profile (EPP) method which is a wireless charging method without a magnet and a magnetic power profile (MPP) method according to a wireless charging standard with an embedded magnet based on MagSafe. Accordingly, a wireless charging method may be changed according to a type of a portable terminal possessed by a passenger of a vehicle. For example, in the case of an EPP standard, any portable terminal may be charged, but in the case of an iPhone series terminal to which magnets are applied, there is inconvenience of efficiency degradation.

The statements in this Background section merely provide background information related to the present disclosure and may not constitute prior art.

### SUMMARY

Embodiments of the present disclosure provide a wireless charger with improved wireless charging efficiency because coil modules according to different standards are selectively mounted on a base module and used according to specifications of a portable terminal of a passenger.

Objectives to be solved by the present invention are not limited to the above-described objectives. Other objectives that are not described herein may be more clearly understood by those having ordinary skill in the art through the following description.

According to an aspect of the present invention, a wireless charger is provided. The wireless charger includes a base module and a coil module configured to be detachably attachable to the base module. The coil module includes a coil for charging and is configured to be electrically connected to the base module.

The wireless charger may further include a controller electrically connected to the coil module. The controller may be configured to control wireless charging is embedded in the base module.

The wireless charger may further include a module mounting structure configured to mount the coil module. The module mounting structure may be formed on an upper surface of the base module.

The module mounting structure may be formed to be recessed in the upper surface of the base module.

The wireless charger may further include a pad coupled to an upper portion of the coil module, wherein the base module may be disposed under a panel in a vehicle and coupled to the panel such that the pad is exposed at an upper side of the panel.

According to another aspect of the present disclosure, another wireless charger is provided. The wireless charger includes a base module, a first coil module including a first coil for charging, and a second coil module including a second coil for charging. The first coil module and the second coil module are configured to be selectively detachably attached to the base module and electrically connected to the base module.

The first coil may be an extended power profile (EPP) coil for EPP charging, and the second coil may be a magnetic power profile (MPP) coil for MPP charging.

The wireless charger may further include a first pad coupled to an upper portion of the first coil module, and a second pad coupled to an upper portion of the second coil module.

The wireless module may include a seating structure configured to seat a portable terminal. The seating structure may be formed to protrude from the upper portion of the second coil module.

An area of an upper surface of the seating structure may be smaller than an area of a lower surface of the portable terminal.

A pad hole through which the seating structure passes may be formed in the second pad.

According to still another aspect of the present disclosure, another wireless charger is provided. The wireless charger includes a base module and a coil module configured to be detachably attachable to the base module. The coil module includes a coil for charging and is configured to be electrically connected to the base module. The wireless charger also includes a coil detector configured to detect a charging method of the coil module. The wireless charger also includes a switch configured to perform a switching operation for transmitting power to the coil module according to the charging method detected by the coil detector.

The wireless charger may further include a controller electrically connected to the coil module. The controller may be configured to control wireless charging.

The wireless charger may further include a power transformer configured to receive power from the switch and convert the power into power that is transmitted to the coil module.

The coil module may include a first coil module including a first coil for charging or a second coil module including a second coil for the charging. The coil detector may be configured to detect whether the first coil or the second coil is attached to the base module. The switch may perform the switching operation for transmitting the power to the first coil or the second coil detected by the coil detector.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a view illustrating a base module of a wireless charger that is selectively coupled to a coil module according to an embodiment of the present disclosure;
FIG. 2 is an exploded perspective view illustrating a wireless charger according to one embodiment of the present disclosure;
FIG. 3 is a perspective view illustrating the wireless charger according to one embodiment of the present disclosure;
FIG. 4 is a view illustrating the wireless charger installed on a panel according to one embodiment of the present disclosure;
FIG. 5 is an exploded perspective view illustrating a wireless charger according to another embodiment of the present disclosure;
FIG. 6 is a perspective view illustrating the wireless charger according to another embodiment of the present disclosure;
FIG. 7 is a view illustrating the wireless charger installed on a panel according to another embodiment of the present disclosure;
FIG. 8 is a view illustrating a portable terminal seated on the wireless charger to be charged according to another embodiment of the present disclosure; and
FIG. 9 is a block diagram illustrating a configuration of the base module of the wireless charger according to one embodiment of the present disclosure.

### DETAILED DESCRIPTION

Since the present disclosure may be variously modified and may have several embodiments, specific embodiments are illustrated in the accompanying drawings and described in detail below. However, this is not intended to limit the present disclosure to the specific embodiments, and it should be appreciated that all changes, equivalents, and substitutes falling within the spirit and technical scope of the present disclosure are encompassed in the present disclosure. In the description of the embodiments, certain detailed descriptions of the related art have been omitted where it was deemed that the detailed descriptions would unnecessarily obscure the gist of the present disclosure.

Terms such as "first" and "second" may be used to describe various components, but the components are not limited by these terms. These terms are used only to distinguish one component from another.

Terms used herein are only for the purpose of describing particular embodiments and are not intended to limit the present disclosure. Singular forms are intended to include the plural forms, unless the context clearly indicates otherwise. In the present specification, it should be understood that the terms "comprise," "comprising," "include," "including," and the like used herein specify the presence of stated features, numbers, steps, operations, elements, components, and/or combinations thereof but do not preclude the presence or addition of one or more other features, numbers, steps, operations, elements, components, and/or combinations thereof.

In addition, throughout the specification, when components are "connected," this may not only mean that two or more components are directly connected, but this may also mean that two or more components are indirectly connected through other components or are physically connected and also electrically connected, or are one thing even referred to as different names according to positions or functions thereof.

In addition, when a first component is described as being formed or disposed "on" or "under" a second component, such a description includes both a case in which the two components are formed or disposed in direct contact with each other and a case in which one or more other components are interposed between the two components. In addition, when the first component is described as being formed "on or under" the second component, such a description may include a case in which the first component is formed at an upper side or a lower side with respect to the second component.

When a component, device, element, or the like of the present disclosure is described as having a purpose or performing an operation, function, or the like, the component, device, or element should be considered herein as being "configured to" meet that purpose or perform that operation or function.

Hereinafter, embodiments of the present disclosure are described in detail with reference to the accompanying drawings. In the following description and the accompanying drawings, components that are the same or correspond to each other are denoted by the same reference numerals, and redundant description thereof is omitted.

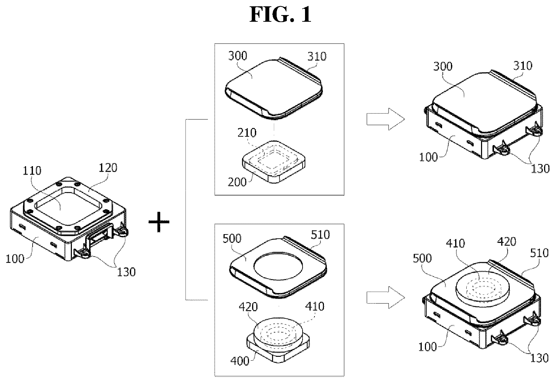

FIG. 1 is a view illustrating a base module of a wireless charger that is selectively coupled to a coil module, according to an embodiment.

In the illustrated embodiment, the wireless charger includes a base module 100 and coil modules 200 and 400 that are detachably attachable to the base module 100. The coil modules 200 and 400 include coils 210 and 410, respectively, and are electrically connected to the base module 100.

The base module 100 is mounted in an interior of a vehicle, for example, at a center fascia, and wirelessly charges a portable terminal 800, such as a smartphone, of a passenger. The base module 100 may be formed as a housing having a rectangular parallelepiped shape substantially having a predetermined height. The wireless charger including the base module 100 may wirelessly charge the portable terminal 800 in a magnetic induction method or magnetic resonance method according to wireless power consortium (WPC) standards. It has been described above that the base module 100 is additionally mounted at the center fascia of the vehicle, but the present disclosure is not limited thereto. For example, the base module 100 may also be integrally formed with the vehicle, and the first coil module 200 or the second coil module 400 may be mounted on the base module 100.

A module mounting part 110 (sometimes referred to herein as a "mounting structure"), on which the first coil module 200 or the second coil module 400 may be selectively mounted, is formed on an upper surface of the base module 100. The module mounting part 110 may be formed to be recessed a predetermined depth inward in the upper surface of the base module 100 to correspond to a shape of the first coil module 200 or the second coil module 400. As one embodiment, the module mounting part 110 may include a connector 760 for connection with the first coil module 200 or the second coil module 400. The first coil module 200 or the second coil module 400 may be coupled to the module mounting part 110 using any of various coupling structures. For example, a fastening bolt may pass through the first coil module 200 or the second coil module 400 so that the first coil module 200 or the second coil module 400 may be coupled to the module mounting part 110. As another example, the first coil module 200 or the second coil module 400 may be coupled to the module mounting part 110 using a structure on which the first coil module 200 or the second coil module 400 is hooked, e.g., a hook structure included in the module mounting part 110.

In various embodiments, a wireless charging method may be a magnetic induction method in which a magnetic induction phenomenon between a primary coil and a secondary coil is used and/or may be a magnetic resonance method in which power is transmitted through magnetic resonance occurring in a frequency band ranging from several tens kilo (k) Hertz (Hz) to several mega (M) Hz. In an embodiment, wireless charging standards for the magnetic resonance method are led by council called alliance for wireless power (A4WP), and standards for the magnetic induction method are led by WPC standards. According to the WPC standards, various types of state information and commands related to a wireless charging system are designed to transmit and receive in an in-band method. A baseline power profile (BPP) and an extended power profile (EPP) are defined in the WPC standards. Further, in the market, a wireless power transmission system is intended to provide a new power transmission profile that is different from the BPP or EPP and recently provides MagSafe, i.e., a magnetic power profile (MPP), as the new power transmission profile.

In an embodiment, the coil modules 200 and 400 having different charging methods may be selectively coupled to the base module 100, and the base module 100 may be electrically connected to a controller 700 regardless of the types of the coil modules 200 and 400. In an embodiment, when any of the coil modules 200 and 400 is coupled to the base module 100, a coil detector 720 may detect the coupling and transmit power through a switching part 730 (e.g., a switch) according to a charging method or coil standard. Hereinafter, it is described that two coil modules 200 and 400 are provided, but the present disclosure is not limited thereto. For example, in some embodiments, coil modules having still different charging methods may also be applied to the coil modules 200 and 400.

In one embodiment, the first coil module 200 is a module to which the EPP is applied, and the second coil module 400 is a module to which the MPP. The EPP is for the conventional charging method which is a wireless charging method without a magnet. According to the EPP, all types of the portable terminal 800 may be charged, but there is a problem of efficiency degradation in the case, for example, of iPhone to which a magnet is applied. In addition, the MPP is used for a wireless charging method based on MagSafe when a magnet is embedded. The MPP for a wireless charging technology used when a magnet is embedded is advantageous, for example, for wireless charging of iPhone to which a magnet is applied.

As a result, it may be advantageous that a wireless charging function is customized and provided according to specifications of the portable terminal 800 (e.g., Android series or iPhone series terminal) of the passenger. According to embodiments of the present embodiment, the first coil module 200 or the second coil module 400 may be selectively mounted on and applied to the base module 100 in order to implement the customized and provided wireless charging function. As one embodiment, a first coil 210 may be an EPP coil for EPP charging, and the second coil 410 may be an MPP coil for MPP charging.

As one embodiment, when the portable terminal 800 of the passenger in the vehicle is an Android phone, the passenger may mount the first coil module 200 on the module mounting part 110 of the base module 100 and may place the portable terminal 800 on a first pad 300 to wirelessly charge the portable terminal 800. As one embodiment, when the portable terminal 800 of the passenger in the vehicle is an iPhone, the passenger may mount the second coil module 400 on the module mounting part 110 of the base module 100 and may place the portable terminal 800 on the second pad 500 to wirelessly charge the portable terminal 800. As described above, in an embodiment, since the first coil module 200 or the second coil module 400 is selectively mounted on the base module 100 and used according to the specifications of the portable terminal 800 of the passenger, wireless charging efficiency may be improved.

The module mounting part 110 may be formed to be recessed in the upper surface of the base module 100, or as illustrated in FIG. 1, a module fixing guide 120 may be formed on the upper surface of the base module 100, and the module mounting part 110 may be formed inside the module fixing guide 120. In addition, a vehicle mounting part 130 may protrude from one surface (e.g., a side surface) of the base module 100 for attachment to the vehicle.

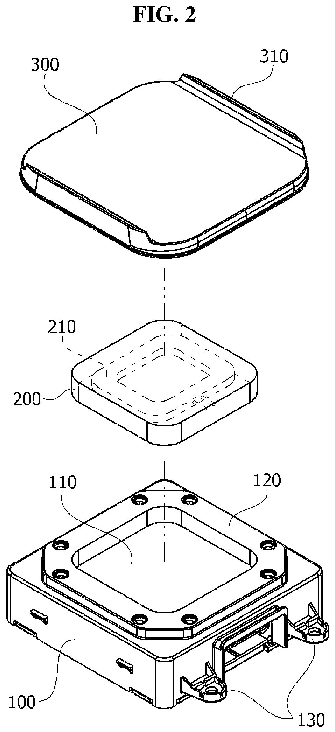

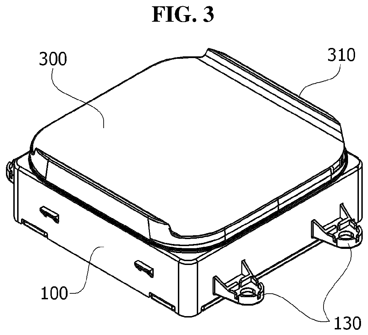

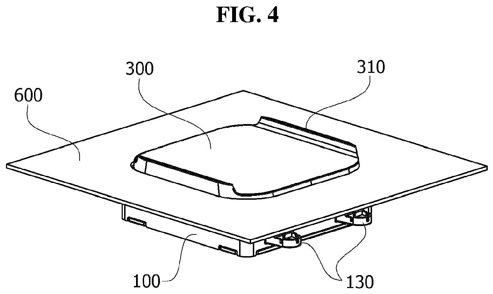

FIG. 2 is an exploded perspective view illustrating the wireless charger according to one embodiment of the present disclosure. FIG. 3 is a perspective view illustrating the wireless charger according to one embodiment of the present disclosure. FIG. 4 is a view illustrating the wireless charger installed on a panel according to one embodiment of the present disclosure.

Referring to the drawings, the first coil module 200 may be formed as a housing having a rectangular parallelepiped shape to be mounted on the module mounting part 110 as described above, but is not limited thereto. For example, the first coil module 200 may be formed in any of various shapes such as a circular shape. The first coil module 200 includes the first coil 210 for electromagnetic induction with a coil provided in the portable terminal 800.

In addition, the first pad 300 may be coupled to an upper portion of the first coil module 200. The first pad 300 is a pad on which the portable terminal 800 is mounted, and guide ribs 310 may be provided to protrude upward from both sides of the first pad 300 such that the portable terminal 800 does not escape outward in a state of being mounted. A surface of the first pad 300 is formed of a friction material to prevent the portable terminal 800 from sliding in the case of sudden braking or sudden start of the vehicle. Thus, the guide ribs 310 may prevent the portable terminal 800 from moving outward when mounted.

Referring to FIG. 4, the base module 100 may be disposed under a panel 600 in the vehicle and coupled to the panel 600 such that the first pad 300 is exposed at an upper side of the panel 600.

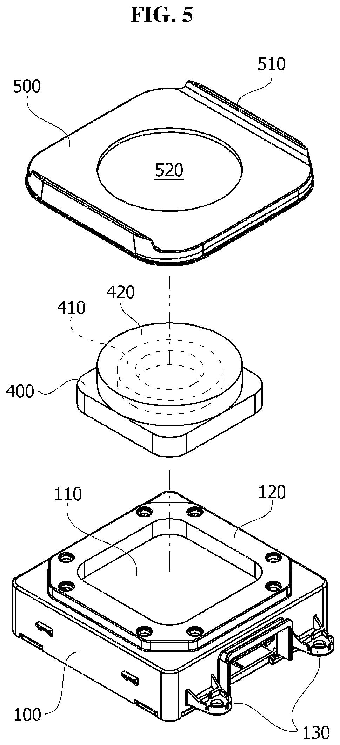

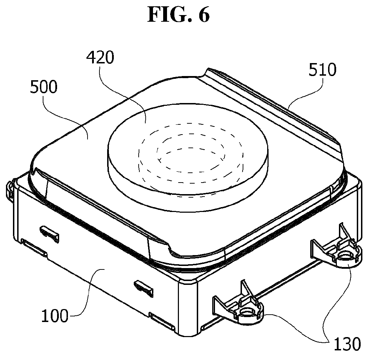

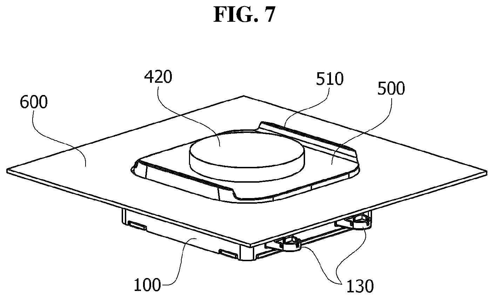

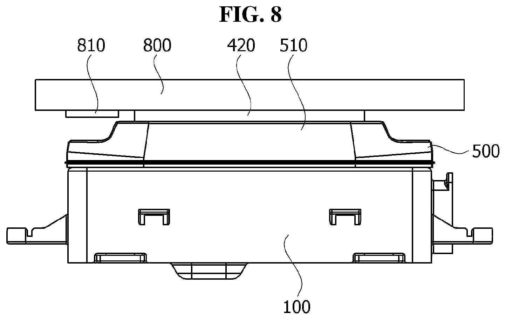

FIG. 5 is an exploded perspective view illustrating a wireless charger according to another embodiment of the present disclosure. FIG. 6 is a perspective view illustrating the wireless charger according to another embodiment of the present disclosure. FIG. 7 is a view illustrating the wireless charger installed on a panel according to another embodiment of the present disclosure. FIG. 8 is a view illustrating a portable terminal seated on the wireless charger to be charged according to another embodiment of the present disclosure.

Referring to the drawings, a second coil module 400 may be formed as a housing having a rectangular parallelepiped shape to be mounted on a module mounting part 110, but is not limited thereto. For example, the second coil module 400 may be formed in any of various shapes such as a circular shape. The second coil module 400 includes a second coil 410 for electromagnetic induction with a coil provided in a portable terminal 800.

In addition, a seating part 420 on which the portable terminal 800 is mounted is provided to protrude from an upper portion of the second coil module 400. The seating part 420 is a part actually in contact with the portable terminal 800 when the portable terminal 800 is seated for charging. The seating part 420 may be provided to protrude a predetermined height upward from the upper portion of the second coil module 400.

Referring to FIG. 7, the base module 100 may be disposed under a panel 600 in a vehicle and coupled to the panel 600 such that a second pad 500 is exposed at an upper side of the panel 600.

Referring to FIG. 8, the seating part 420 (sometimes referred to herein as a "seating structure") is a part provided to prevent the portable terminal 800, e.g., an iPhone series terminal, seated on the second coil module 400 from interfering with a camera part 810. An area of an upper surface of the seating part 420 may be smaller than an area of a lower surface of the portable terminal 800.

In the case of the portable terminal 800 which is an iPhone series terminal, since the camera part 810 is provided to protrude, when the portable terminal 800 is placed on the second pad 500, an entirety of a lower surface thereof is not in contact with the second pad 500, and thus one side thereof is floating. When a portion of the lower surface of the portable terminal 800 is not in direct contact with the second pad 500, charging is not smoothly performed.

Accordingly, in an embodiment, the seating part 420 is provided to protrude upward such that the entire lower surface of the portable terminal 800 is in contact with the seating part 420 and the camera part 810 is located outside the seating part 420. It has been described as an example that the portable terminal 800 placed on the second pad 500 is an iPhone series terminal, but the present disclosure is not limited thereto. The present disclosure may be applied to any portable terminal 800 that has a protruding portion on a lower surface thereof like the camera part 810.

As an example, the seating part 420 may be provided to protrude in a disc shape from the upper portion of the second coil module 400, but is not limited thereto, and may be formed in any of various shapes such as a quadrangular plate shape. In addition, the seating part 420 may pass through a pad hole 520 formed in the second pad 500 to protrude upward from the second pad 500. The pad hole 520 is formed to correspond to a shape of the seating part 420, and may have a circular shape as one embodiment.

The second pad 500 may be coupled to the upper portion of the second coil module 400. The second pad 500 is a pad on which the portable terminal 800 is seated, and guide ribs 510 are provided to protrude upward from both sides of the second pad 500 such that the portable terminal does not escape outward in a state of being seated. A surface of the second pad 500 is formed of a friction material to prevent the portable terminal 800 from sliding in the case of sudden braking or sudden start of the vehicle.

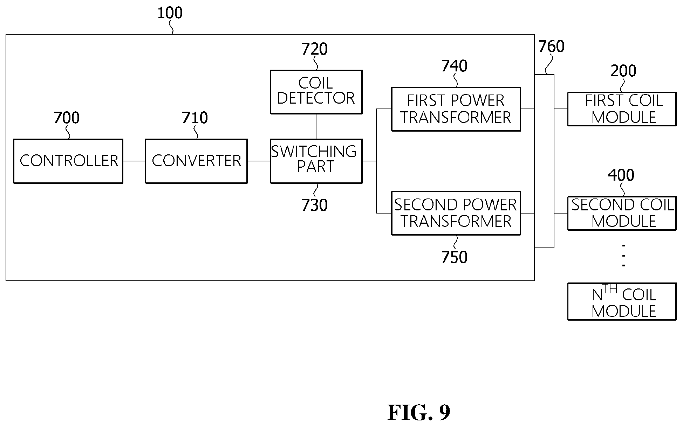

FIG. 9 is a block diagram illustrating a configuration of the base module of the wireless charger according to one embodiment of the present disclosure.

Referring to FIG. 9, the controller 700, a converter 710, the coil detector 720, the switching part 730, a first power transformer 740, and a second power transformer 750 may be disposed in the base module 100 of the wireless charger. The controller 700 may be implemented using various processing devices, such as a microprocessor and the like in which a semiconductor chip capable of performing operations or executions of various commands is embedded, and may perform an operation of the wireless charger according to one embodiment of the present invention. In an embodiment, the controller 700 may embody or be included with at a processor and a memory, such as a non-transitory computer readable media, as part of the controller 700.

The wireless charger according to another embodiment of the present invention may include the base module 100, coil modules 200 and 400 which are detachably attachable to the base module 100, respectively include coils 210 and 410, and are electrically connected to the base module 100, a coil detector 720 which detects a charging method of the mounted coil modules 200 and 400, and a switching part 730 (e.g., a switch) which performs a switching operation for transmitting power to the coil modules 200 and 400 according to the charging method detected by the coil detector 720.

When the first coil module 200 or the second coil module 400 is coupled to the coil detector 720, the coil detector 720 serves to detect the coupling. For example, the coil detector 720 may detect a first coil 210 for EPP charging when the first coil module 200 is coupled thereto and may detect a second coil 410 for MPP charging when the second coil module 400 is coupled. Accordingly, the coil detector 720 may detect the type of the coupled coil. For example, the system applies a known test signal (e.g., a 1 kHz sinusoidal signal), measures the impedance. This impedance is then compared against a stored table of known coil types to identify the most likely match.

The switching part 730 may perform the switching operation for transmitting power toward the first coil 210 or the second coil 410 detected by the coil detector 720. That is, the switching part 730 may perform the switching operation for transmitting the power according to the type of the detected coil.

The first power transformer 740 serves to receive power from the switching part 730 and converts the power into first power that is transmitted to the first coil 210, and the second power transformer 750 serves to receive power from the switching part 730 and convert the power into second power that is transmitted to the second coil 410. As one embodiment, the first power transformer 740 may be a time constant matching circuit for EPP charging, and the second power transformer 750 may be a time constant matching circuit and resonance switching circuit for MPP charging. In addition, the base module 100 may include a connector 760 connected to the first coil module 200 or the second coil module 400.

In addition, the first coil module 200 and the second coil module 400 have been mainly described above, but the present disclosure is not limited thereto, and may be applied to an n^{th} coil module such as a third coil module or fourth coil module.

According to one embodiment of the present invention, coil modules according to different standards can be selectively mounted on a base module according to the specifications of a portable terminal of a passenger, and thus wireless charging efficiency may be improved.

While the present disclosure has been described above with reference to specific embodiments of the present disclosure, it should be understood by those having ordinary skill in the art that various modifications and changes of the present disclosure may be made within a range not departing from the spirit and scope of the present disclosure defined by the appended claims.

## Claims

1. A wireless charger comprising:
a base module; and
a coil module configured to be detachably attachable to the base module, wherein the coil module includes a coil for charging and is configured to be electrically connected to the base module.

2. The wireless charger of claim 1, wherein a controller, which is electrically connected to the coil module and controls wireless charging, is embedded in the base module.

3. The wireless charger of claim 1, wherein the coil module is configured to be mounted on a mounting structure formed on an upper surface of the base module.

4. The wireless charger of claim 3, wherein the mounting structure is recessed in the upper surface of the base module.

5. The wireless charger of claim 1, further comprising a pad coupled to an upper portion of the coil module, wherein the base module is disposed under a panel in a vehicle and is coupled to the panel such that the pad is exposed at an upper side of the panel.

6. A wireless charger comprising:
a base module;
a first coil module including a first coil for charging; and
a second coil module including a second coil for charging,
wherein the first coil module and the second coil module are configured to be selectively detachably attached to the base module and electrically connected to the base module.

7. The wireless charger of claim 6, wherein:
the first coil is an extended power profile (EPP) coil for EPP charging; and
the second coil is a magnetic power profile (MPP) coil for MPP charging.

8. The wireless charger of claim 7, further comprising a first pad coupled to an upper portion of the first coil module, and a second pad coupled to an upper portion of the second coil module.

9. The wireless charger of claim 8, further comprising a seating structure configured to seat a portable terminal, wherein the seating structure is formed to protrude from the upper portion of the second coil module.

10. The wireless charger of claim 8, wherein an area of an upper surface of the seating structure is smaller than an area of a lower surface of the portable terminal.

11. The wireless charger of claim 8, wherein a pad hole through which the seating structure passes is formed in the second pad.

12. A wireless charger comprising:
a base module;
a coil module configured to be detachably attachable to the base module, wherein the coil module includes a coil for charging and is configured to be electrically connected to the base module;
a coil detector configured to detect a charging method of the coil module; and
a switch configured to perform a switching operation for transmitting power to the coil module according to the charging method detected by the coil detector.

13. The wireless charger of claim 12, further comprising a controller electrically connected to the coil module, wherein the controller is configured to control wireless charging.

14. The wireless charger of claim 13, further comprising a power transformer configured to receive power from the switch and convert the power into power that is transmitted to the coil module.

15. The wireless charger of claim 12, wherein:
the coil module includes a first coil module including a first coil for charging or a second coil module including a second coil for charging;
the coil detector is configured to detect whether the first coil or the second coil is attached to the base module; and
the switch is configured to perform the switching operation for transmitting the power to the first coil or the second coil detected by the coil detector.
